# EUROPEAN PATENT APPLICATION

(11) **EP 4 761 335 A1**
(43) Date of publication of application: **17.06.2026**
(21) Application number: 23947955.3
(22) Date of filing: 08.08.2023
(51) Int. Cl.: H04W 24/08

(54) **PERCEPTION NODE DETERMINATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIANG, Bin, Dongguan, Guangdong 523860 (CN); XU, Jing, Dongguan, Guangdong 523860 (CN); LIN, Yanan, Dongguan, Guangdong 523860 (CN)
(74) Representative: Novagraaf Technologies
(86) International application number: PCT/CN2023/111786
(87) International publication number: WO 2025/030376

(57) **Abstract**

The present application relates to the technical field of perception. Disclosed are a perception node determination method and apparatus, and a device and a storage medium. The method is executed by means of a first node. The method comprises: receiving a perception signal; and on the basis of first information of the first perception signal, determining a second node corresponding to the perception signal, wherein the first information is used for indicating the correspondence between the perception signal and the second node. By means of determining, on the basis of first information, a second node corresponding to a perception signal received by a first node, the accuracy and efficiency of perception are improved.

## Description

### TECHNICAL FIELD

Embodiments of the present disclosure relate to the technical field of sensing technology, and in particular, relate to a method and apparatus for determining a sensing node, and a device and a storage medium therefor.

### RELATED ART

Sensing refers to a technology of detecting parameters of a physical environment using radio waves to achieve environmental perception, such as target localization, movement recognition, and imaging. In a sensing scenario, a sensing transmitter node transmits a sensing signal, and the sensing signal is reflected by a sensing target to a sensing receiver node. Upon receiving the sensing signal, the sensing receiver node determines sensing information based on the received sensing signal.

In related arts, in a case where several sensing nodes exist around a sensing target, the several sensing nodes jointly participate in a sensing process such that a more accurate sensing result is acquired.

However, how the sensing receiver node determines, using the received sensing receiving node, the sensing node transmitting the sensing signal is a problem that needs to be solved.

### SUMMARY

Embodiments of the present disclosure provide a method and apparatus for determining a sensing node, and a device and storage medium therefor.

According to an aspect of the embodiments of the present disclosure, a method for determining a sensing node is provided. The method is performed by a first node, and includes:
receiving a sensing signal; and
determining a second node corresponding to the sensing signal based on first information of the sensing signal, wherein the first information is used to indicate a correspondence between the sensing signal and the second node.

According to an aspect of the embodiments of the present disclosure, an apparatus for determining a sensing node is provided, and includes: a receiving module and a determining module; wherein
the receiving module is configured to receive a sensing signal; and
the determining module is configured to determine a second node corresponding to the sensing signal based on first information of the sensing signal, wherein the first information is used to indicate a correspondence between the sensing signal and the second node.

According to an aspect of the embodiments of the present disclosure, a sensing device is provided. The sensing device includes a transceiver and a processor communicably connected to the transceiver; wherein
the transceiver is configured to receive the sensing signal;
the processor is configured to determine a second node corresponding to the sensing signal based on first information of the sensing signal, wherein the first information is used to indicate a correspondence between the sensing signal and the second node.

According to an aspect of the embodiments of the present disclosure, a computer-readable storage medium is provided. The computer-readable storage medium includes one or more computer programs executed by a processor to perform the above method for determining a sensing node.

According to an aspect of the embodiments of the present disclosure, a chip is provided. The chip includes programmable electric logic circuitry and/or one or more program instructions, and the chip, when running, is configured to perform the above method for determining a sensing node.

According to an aspect of the embodiments of the present disclosure, a computer program product or computer program is provided. The computer program product includes one or more computer instructions stored in a computer-readable storage medium, and a processor calls and executes the one or more computer instructions from the computer-readable storage medium to perform the above method for determining a sensing node.

The technical solutions according to the embodiments of the present disclosure may achieve the following beneficial effects:

By receiving the sensing signal, and determining the second node corresponding to the sensing signal based on the first information indicating the correspondence between the sensing signal and the second node, the method achieves the determination of the second node corresponding to the sensing signal; and increases a precision and effectiveness of sensing under receiving a plurality of sensing signals by distinguishing sensing signals corresponding to different sensing nodes.

### BRIEF DESCRIPTION OF DRAWINGS

For clearer descriptions of the technical solutions according to the embodiments of the present disclosure, the following briefly illustrates drawings required for the description of the embodiments. Obviously, the illustrated drawings below are only some embodiments of the present disclosure. For ordinary persons skilled in the art, other drawings may be obtained based on these drawings without the premise of creative labor.
FIG. 1 is schematic diagram of different modes of sensing;
FIG. 2 is a schematic block diagram of a sensing system according to some embodiments of the present disclosure;
FIG. 3 is a schematic block diagram of a sensing process according to some embodiments of the present disclosure;
FIG. 4 is a schematic flowchart of a method for determining a sensing node according to some embodiments of the present disclosure;
FIG. 5 is a schematic flowchart of a method for determining a sensing node according to some embodiments of the present disclosure;
FIG. 6 is a schematic flowchart of a method for determining a sensing node according to some embodiments of the present disclosure;
FIG. 7 is a schematic flowchart of a method for determining a sensing node according to some embodiments of the present disclosure;
FIG. 8 is a schematic flowchart of a method for determining a sensing node according to some embodiments of the present disclosure;
FIG. 9 is a schematic flowchart of a method for determining a sensing node according to some embodiments of the present disclosure;
FIG. 10 is a schematic flowchart of a method for determining a sensing node according to some embodiments of the present disclosure;
FIG. 11 is a schematic structural block diagram of an apparatus for determining a sensing node according to some embodiments of the present disclosure; and
FIG. 12 is a schematic structural diagram of a sensing device according to some embodiments of the present disclosure.

### DETAILED DESCRIPTION

For clearer descriptions of the objectives, technical solutions and advantages of the present disclosure, the embodiments of the present disclosure are described hereinafter in combination with the accompanying drawings.

The network architecture and service scenarios described in the embodiments of the present disclosure are intended to illustrate the technical solutions according to the embodiments of the present disclosure more clearly but do not limit the technical solutions. Those skilled in the art understand that with the evolution of the network architecture and emergence of new service scenarios, the technical solutions according to the embodiments of the present disclosure are also applicable to addressing similar technical problems.

Before description of the technical solutions according to the present disclosure, some background technical knowledge relevant to the present disclosure is introduced and explained first. The following related technologies, as optional solutions, may be randomly combined with the technical solutions according to the embodiments of the present disclosure, which fall within the scope of protection of the embodiments of the present disclosure. The embodiments of the present disclosure include at least part of the following content.

Sensing refers to the technology of using radio waves to detect parameters of a physical environment, in order to achieve environmental perception such as target localization, movement recognition, and imaging. Sensing nodes that participate in sensing include:
- a sensing transmitter node: a transmitter node of a sensing signal;
- a sensing receiver node: a receiver node for a sensing signal;
- a sensing node: the sensing transmitter node and the sensing receiver node are collectively referred to as sensing nodes, i.e., a node that performs sensing;
- a sensing control node: a node for controlling sensing operations; wherein the sensing control node configures sensing operations for the sensing node, and the sensing node feeds back sensing results to the sensing control node upon completing the sensing operations.

Under the tendency that that the spectrum for wireless communication and the spectrum for sensing increasingly overlap, integrated sensing and communication combines both functions, and may implement the sensing function using wireless resources for the wireless communication. That is, sensing services within a wider area may be achieved based on widespread deployment of cellular networks; a base station and a plurality of terminals may jointly participate in sensing to achieve a higher sensing accuracy; and hardware modules from wireless communication may be reused for the sensing function, thereby reducing costs. In short, the technology of integrated sensing and communication enables the sensing function for a future wireless communication system, and offers a solid basis for future development of smart transportation, smart cities, smart factories, drones, and other related businesses.

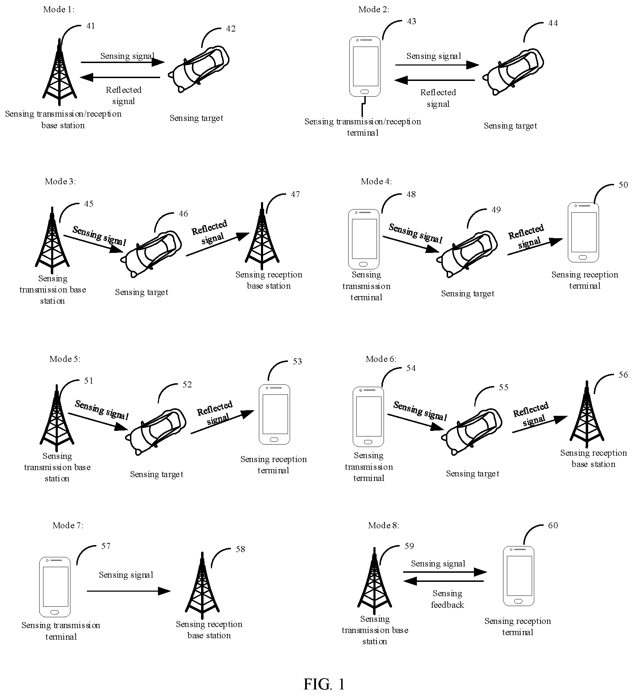

Sensing may be implemented in at least one of the 8 following modes illustrated in FIG. 1.

Mode 1: Base station monostatic sensing. In Mode 1, the sensing transmitter node and the sensing receiver node are a same base station 41. That is, the base station 41 transmits a sensing signal to a sensing target 42, and the same base station 41 receives an echo (i.e., a sensing signal reflected by the sensing target) signal upon reflection of the sensing signal from the sensing target 42.

Mode 2: Terminal monostatic sensing. In Mode 2, the sensing transmitter node and the sensing receiver node are a same terminal 43. That is, the terminal 43 transmits a sensing signal to a sensing target 44, and the same terminal 43 receives an echo signal upon reflection of the sensing signal from the sensing target 44.

Mode 3: Base station collaborative sensing. In Mode 3, the sensing transmitter node and the sensing receiver node are different base stations. That is, one base station 45 transmits a sensing signal to a sensing target 46, and another base station 47 receives an echo signal upon reflection of the sensing signal from the sensing target 46.

Mode 4: Terminal collaborative sensing. In Mode 4, the sensing transmitter node and the sensing receiver node in Mode 4 are different terminals. That is, one terminal 48 transmits a sensing signal to a sensing target 49, and another terminal 50 receives an echo signal upon reflection of the sensing signal from the sensing target 49.

Mode 5: Base station-to-terminal collaborative sensing. In Mode 5, the sensing transmitter node is a base station 51, and the sensing receiver node is a terminal 53. That is, the base station 51 transmits a sensing signal to the sensing target 52, and the terminal 50 receives an echo signal upon reflection of the sensing signal from the sensing target 54.

Mode 6: Terminal-to-base station collaborative sensing. In Mode 6, the sensing transmitter node is a terminal 54, and the sensing receiver node is a base station 56. That is, the terminal 54 transmits a sensing signal to the sensing target 55, and the base station receives an echo signal upon reflection of the sensing signal from the sensing target 56.

Mode 7: The sensing target is the sensing transmitter node. In Mode 7, the sensing transmitter node is a terminal 57, and the sensing receiver node is a base station 58. As the sensing target (the terminal 57) is the sensing transmitter node, the sensing signal is transmitted by the sensing transmitter node (the terminal 57) to the sensing receiver node (base station 58) and no reflection is required thereafter. Instead, the base station 58 may directly parse a sensing result upon reception of the sensing signal.

Mode 8: The sensing target is the sensing receiver node. In Mode 8, the sensing transmitter node is the base station 59, while the sensing receiver node is a terminal 60. As the sensing target (the terminal 60) is the sensing receiver node, a sensing result needs to be fed back to the base station 59 upon receiving the sensing signal by the terminal 60, and thus the base station 59 may acknowledge the sensing result.

In the 8 sensing modes illustrated in FIG. 1, the sensing nodes are only represented as single nodes (for example, in Mode 1 and Mode 2, a single node serves as both the sensing transmitter node and the sensing receiver node) or nodes in pairs (for example, from Mode 3 to Mode 8, a pair of different nodes serve as the sensing transmitter node and the sensing receiver node respectively). However, the wireless communication system includes a large number of terminal devices (for example, cellphones and Internet of things (IoT) devices), and in a scenario where a plurality of sensing nodes are present around one sensing target (including the sensing transmitter node and the sensing receiver node, i.e., base stations transmitting and/or receiving sensing signals, cellphones, IoT devices, and the like), these plurality of sensing nodes jointly participating in sensing increases the accuracy of the sensing, and provides more comprehensive sensing services by satisfying more complex sensing requirements. In a case where a plurality of sensing nodes are present in the system, a sensing control node may be present to manage and control the entire sensing system to increase efficiency. The sensing control node may be a base station, a terminal, or a core network element.

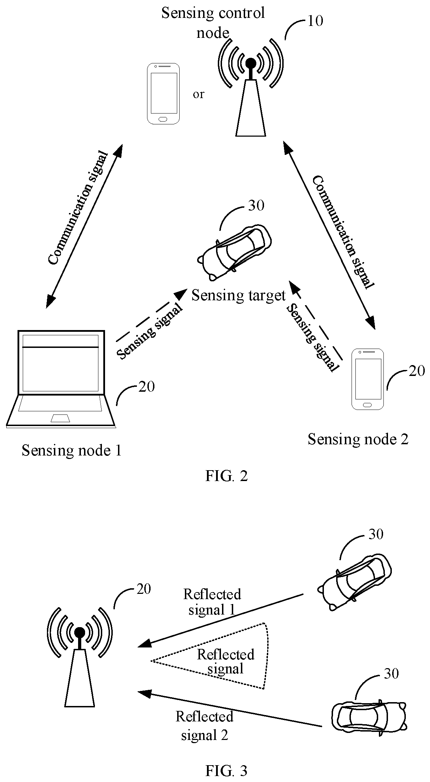

FIG. 2 is a schematic block diagram of a sensing system according to some embodiments of the present disclosure. The sensing system may include a sensing control node 10, a sensing node 20, and a sensing target 30.

The sensing control node 10 refers to a node controlling a sensing process, which may be a base station, a terminal or a core network element. The sensing control node 10 may have different functions within the sensing system. For example, the sensing control node 10 may initiate sensing, set up a configuration for a sensing scenario, and analyze sensing feedback transmitted by a sensing node via a sensing initiator node, to assist the sensing initiator node, or the like.

The sensing node 20 includes a sensing transmitter node and a sensing receiver node, which may include base stations, terminals, IoT devices, or any form of handheld devices, vehicle-mounted devices, wearable devices and computing devices, or other processing device connected to a wireless modem, as well as user equipments (UEs), mobile stations (MSs), and the like possessing wireless communication function. Generally, a plurality of sensing nodes 20 are provided, and one or a plurality of sensing nodes 20 may be deployed within a cell controlled by the sensing control node 10.

The sensing target 30 is a target object to be sensed, and includes a person or an object. For example, in a scenario where sensing is applied to monitoring indoor intrusions, the sensing target 30 is an intruder in a room; or in a scenario where sensing is applied to monitoring vehicle speeds, the sensing target 30 is a vehicle on a road.

The sensing control node 10 and the sensing node 20 communicate with each other over some communication signals. For example, the sensing control node 10 distributes a sensing operation and informs the sensing node 20 of a sensing configuration, or the sensing node 20 reports sensing feedback to the sensing control node 10, and the like. Upon receiving the sensing operation distributed by the sensing control node 10, the sensing node 20 senses the sensing target 30 by transmitting or receiving sensing signals.

FIG. 3 is a schematic diagram of a sensing process according to some embodiments of the present disclosure. The sensing process is performed by the sensing node 20 and the sensing target 30 in the sensing system illustrated by FIG. 2. The sensing node 20 transmits a sensing signal, which is received as an echo signal by the sensing node 20 upon reflection of the sensing signal from the sensing target 30. As illustrated in FIG. 3, an echo signal 1 and an echo signal 2 are obtained respectively upon reflection of the sensing signal from the two sensing targets 30, and the sensing node 20 receives the echo signal 1 and the echo signal 2.

Hereinafter are the technical solutions described by the embodiments of the present disclosure.

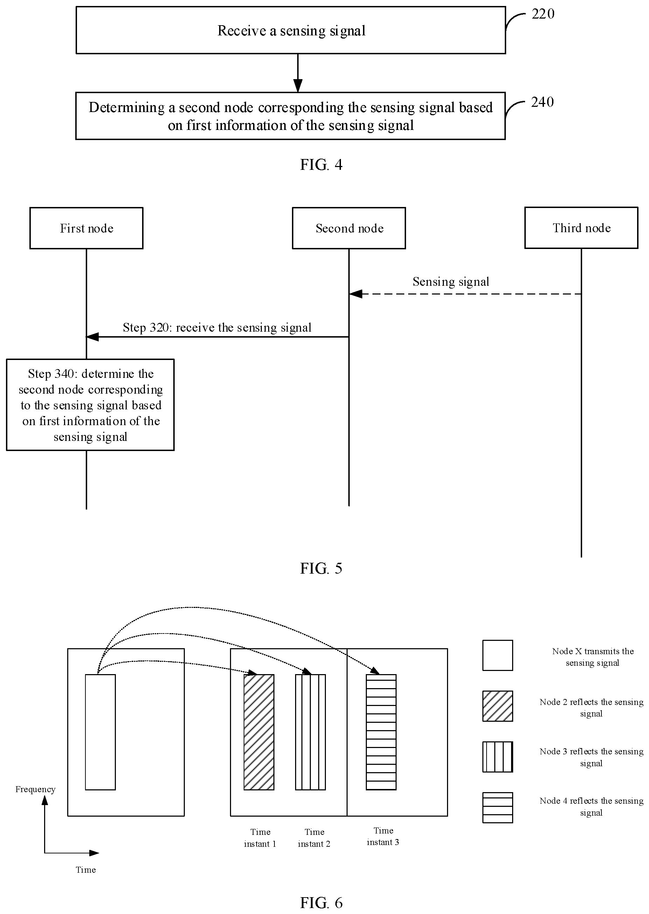

FIG. 4 is a schematic flowchart of a method for determining a sensing node according to some embodiments of the present disclosure. The method is performed by a first node, wherein the first node may be the sensing node 20 in the sensing system illustrated in FIG. 2. The method includes:

**In step 220, a sensing signal is received.**

Specifically, a first node receives the sensing signal.

In some embodiments, the first node receives a sensing signal, wherein the sensing signal is a separate signal; or a sensing signal is received by a first sensing node, wherein the sensing signal may be parsed into two sensing signals according to orthogonality properties thereof; or the first node receives at least two sensing signals, which is not limited in the present disclosure.

The sensing signal received by the first node corresponds to a second node, and the sensing signal is used by the first node to sense the second node. That is, the sensing signal is used to sense from the second node at least one of:
- a position, i.e., geographic coordinates of the second node;
- a distance, i.e., a distance or a straight-line distance between the second node and the first node;
- a speed, i.e., a moving speed of the second node;
- an angle, i.e., an orientation of the second node relative to the first node;
- a phase, i.e., a phase of the sensing signal received, or a phase of the sensing signal received at different time instants; or
- a frequency, i.e., a frequency of changes in the sensing signal received such as amplitude changes, phase changes, power changes, or the like; or a frequency of changes in the cause for the aforementioned variations; for example, in a case where a distance change causes a phase change, the sensing signal may be used for the frequency of the phase change, which is also the frequency of the distance change.

In some embodiments, a third node transmits the sensing signal, and the second node is a node that directly reflects the sensing signal or a node that retransmits the sensing signal upon processing the sensing signal. That is, the sensing signal may be the sensing signal reflected from the second node following transmission by the third node. For example, the sensing node 20 illustrated in FIG. 3 is the third node and the first node, the sensing target 30 is the second node, and the sensing signal transmitted by the sensing node 20 is received by the sensing node 20 upon direct reflection from the sensing node 30; or the sensing signal is an output from the second node, which is generated by processing the sensing signal from the third node. For example, the sensing signal is an output from the second node, which is generated by modulating the sensing signal from the third node. As another example from Mode 3 illustrated in FIG. 1, the base station 45 is the third node, the sensing target 46 is the second node, and the base station 47 is the first node. In this example, the sensing target 46 receives the sensing signal from the base station 45, processes the received sensing signal, and then transmits the processed sensing signal to the base station 47.

That is, the sensing signal includes at least one of:
- a second sensing signal, resulting from the reflection of a first signal by the second node; or
- a third sensing signal transmitted after a first signal is processed by the second node.

The first sensing signal is the sensing signal transmitted by the third node.

The third node is the node transmitting the sensing signal, and may or may not be the same sensing node as the first node. Mode 1 and Mode 2 in the sensing system illustrated by FIG. 1 may be referenced for a scenario where the third node and the first node are the same sensing node. Reference may be made to any of Modes 3 to 6 in the sensing system illustrated in FIG. 1 for a scenario where the third node and the first node are different sensing nodes.

In some embodiments, the second node is a reduced-capacity node. That is, the second node is at least one of:
- a node with a supported data rate less than a first threshold; or
- a node with a power saving requirement greater than a second threshold.

The first threshold is a threshold for a data rate supported by the sensing node specified in the communication protocol or pre-configured; the second threshold is a threshold for a power saving requirement of the sensing node specified in the communication protocol or pre-configured.

**In step 240, the second node corresponding to the sensing signal is determined based on first information of the sensing signal.**

The first information indicates a correspondence between the second node and the sensing signal.

The first information includes at least one of:
- time-domain information of the sensing signal;
- frequency-domain information of the sensing signal;
- spatial information of the sensing signal; or
- coding information of the sensing signal.

In some embodiments, the time-domain information includes at least one of:
- a time-domain symbol containing the sensing signal;
- a slot number containing the sensing signal;
- a start symbol of a time-domain resource containing the sensing signal;
- an end symbol of a time-domain resource containing the sensing signal;
- a number of symbols of a time-domain resource occupied by the sensing signal;
- a duration of a time-domain resource occupied by the sensing signal;
- a start slot of a time-domain resource containing the sensing signal;
- an end symbol of a time-domain resource containing the sensing signal; or
- a number of slots of time-domain resource occupied by the sensing signal.

In some embodiments, the frequency-domain information includes at least one of:
- a frequency-domain resource occupied by the sensing signal;
- a carrier frequency of the sensing signal; or
- a carrier number occupied by the sensing signal.

The frequency-domain resource occupied by the sensing signal includes at least one of:
- a start position of the frequency-domain resource;
- an end position of the frequency-domain resource;
- a range of the frequency-domain resource (i.e. the extension from the starting position to the ending position); or
- a sub-carrier of the frequency-domain resource.

The carrier frequency of the sensing signal includes at least one of:
- carrier frequency numbering of the carrier frequency; or
- a frequency band of the carrier frequency.

The numbering of the carrier includes at least one of:
- an ID of the carrier numbering; or
- a sequence number of the carrier numbering.

In some embodiments, the spatial information includes at least one of:
- a beam used by the sensing signal; or
- an antenna port used by the sensing signal.

The beam used by the sensing signal includes at least one of:
- an ID of the beam;
- a sequence number of the beam; or
- coding information of the beam.

In some embodiments, the coding information includes: a modulation sequence used by the second node in modulating the sensing signal.

In some embodiments, the first information is added to the first sensing signal by a third node during transmission of the first sensing signal; or the first information is added to the first sensing signal by the second node upon reception of the first sensing signal.

In some embodiments, the first information is added to the first sensing signal by at least one of:
- adding the first information to the first sensing signal via coding;
- adding the first information to the first sensing signal via modulation; or
- adding the first information to the first sensing signal via directional transmission.

In some embodiments, the first information is added to the first sensing signal via modulation in a scenario where the first information includes the coding information. For example, adding the first information to the first sensing signal via binary code formed by '1's and '0's; or adding the first information to the first sensing signal via direction transmission. As another example, "being orthogonal or quasi-orthogonal to each other" indicates that the modulation sequences used by different second nodes are different, or that the sensing signals received upon being modulated by different second nodes are different.

In some embodiments, the first information is added to the first sensing signal via coding in a scenario where the first information includes the coding information. For example, the first information is added to the first sensing signal via convolution of the first sensing signal and specified sequences, wherein "being orthogonal or quasi-orthogonal" indicates the sequences used by different second nodes are different. As another example, the first information is added to the first sensing signal via a scrambled signal processing, wherein different second nodes use different scrambled code to scramble the first sensing signal, and "being orthogonal or quasi-orthogonal" indicates the scramble codes used by different second nodes are different.

In some embodiments, the first information is added to the first sensing signal via directional transmission in a scenario wherein the first information includes spatial information. For example, the first sensing signal is transmitted by different second nodes over different beams.

In some embodiments, the first information is added to the first sensing signal over different time-domain resources. For example, the first sensing signal is transmitted over different time-domain symbols by different second nodes.

In some embodiments, the first information is added to the first sensing signal over different frequency-domain resources. For example, the first sensing signal is transmitted over different carriers by different seconds nodes.

In some embodiments, the first information is determined by the third node. For example, the first information is determined by the third node based on the second node or the candidate second node; wherein the target second node is a target receiver node of the first sensing signal, and the candidate second node is a candidate second node of the first sensing signal. That is, the first information is determined by the third node transmitting the first sensing signal based on the target receiver node or a receiver node that may receive the first sensing signal.

To determine the second node corresponding to the sensing signal based on the first information, the same first information is configured between the sensing nodes. In some embodiments, the first information is configured by at least one of:
- configuring, by a fourth node, the first information to the first node, and to at least one of the second node or a third node;
- reporting, by the second node, the first information to a fourth node, and subsequently configuring the first information to the first node and/or a third node;
- reporting, by the second node, the first information to the first node and/or a third node;
- using a configuration specified in the communication protocol; or
- scanning, by a fourth node, all second nodes to determine the first information, and subsequently configuring the first information to the first node and/or a third node.

The fourth node is a node for configuring the first information. The fourth node may be the same sensing node as the first sensing node, i.e., the first node configures the first information, configures the first information for at least one of the second node or the third node. For example, the first node configures the first information for at least the second node in a scenario where the first information is added to the sensing signal by the second node. As another example, the first node configures the first information for at least the third node in a scenario where the first information is added to the sensing signal by the third node. Alternatively, the fourth node and the third node are the same node, i.e., the third node configures the first information for the first node. In some embodiments, the third node may need to configure the first information for the second node; as another example; the third node configures the first information for the first node subsequent to scanning all second nodes to determine the first information.

It should be noted that step 220 may be implemented as an individual method for receiving the sensing signal; and step 240 may also be implemented as an individual method for determining the sensing signal, which is not limited in the present disclosure.

In the technical solutions according to the embodiments of the present disclosure, upon receipt of the sensing signal, the second node corresponding to the sensing signal is determined based on the first information of the correspondence between the second node and the sensing signal, such that the sensing node corresponding to the sensing signal is determined; and upon receipt of a plurality of sensing signals, sensing signals corresponding to different sensing nodes are distinguished, such that accuracy and effectiveness of the sensing are improved.

FIG. 5 is a schematic flowchart of a method for determining a sensing node according to some embodiments of the present disclosure. The method is applicable to the sensing system illustrated in FIG. 2, and is performed by a first node, a second node, and a third node. The first node, the second node, and the third node may be implemented as the sensing node 20 illustrated in FIG. 2. The method includes the following steps.

**In step 320, the sensing signal is received.**

The first node receives the sensing signal, wherein the sensing signal is transmitted to the second node by the third node, and is received by the first node upon processed or reflected by the second node. That is, the sensing signal includes at least one of:
- a second signal resulting from reflection of a first sensing signal by the second node; or
- a third sensing signal transmitted upon processing of a first sensing signal by the second node.

The first sensing signal is a sensing signal transmitted by the third node.

The third node is the node transmitting the sensing signal, and may or may not be the same sensing node as the first node. Mode 1 and Mode 2 in the sensing system illustrated by FIG. 1 may be referenced for a scenario where the third node and the first node are the same sensing node. Any of Modes 3 to 6 in the sensing system illustrated by FIG. 1 may be referenced for a scenario where the third node and the first node are different sensing nodes.

In some embodiments, the first node receives a sensing signal, wherein the sensing signal is a separate signal; or a sensing signal is received by the first sensing node wherein the sensing signal may be parsed into two sensing signals according to orthogonality properties thereof; or the first node receives at least two sensing signals, which is not limited in the present disclosure.

The sensing signal received by the first node corresponds to the second node, and the sensing signal is used by the first node to sense the second node. That is, the sensing signal is used to sense from the second node at least one of:
- a position, i.e., geographic coordinates of the second node;
- a distance, i.e., a distance or a straight-line distance between the second node and the first node;
- a speed, i.e., a moving speed of the second node;
- an angle, i.e., an orientation of the second node relative to the first node;
- a phase, i.e., a phase of the sensing signal received, or a phase of the sensing signal received at different time instants; or
- a frequency, i.e., a frequency of changes in the sensing signal received such as amplitude changes, phase changes, power changes, or the like; or a frequency of changes in the cause for the aforementioned variations; for example, in a case where a distance change causes a phase change, the sensing signal may be used for the frequency of the phase change, which is also the frequency of the distance change.

In some embodiments, the second node is a reduced-capacity node. That is, the second node is at least one of:
- a node with a supported data rate less than a first threshold; or
- a node with a power saving requirement greater than a second threshold.

The first threshold is a threshold for a data rate supported by the sensing node specified in the communication protocol or pre-configured; and the second threshold is a threshold for a power saving requirement of the sensing node specified in the communication protocol or pre-configured.

**In step 340, the first node determines the second node corresponding to the sensing signal based on first information of the sensing signal.**

The first information is used to indicate a correspondence between the sensing signal and the second node.

The first information includes at least one of:
- time-domain information of the sensing signal;
- frequency-domain information of the sensing signal;
- spatial information of the sensing signal; or
- coding information of the sensing signal.

The following describes the above four scenarios:
(1) The first information includes the time-domain information of the sensing signal.

In some embodiments, the second node transmits the sensing signal over different time-domain resources upon receiving the sensing signal transmitted by the third node. The first node determines the second node corresponding to the sensing signal over the time-domain resources on the sensing signal based on the first information upon receiving the sensing signal.

In some embodiments, the time-domain information includes at least one of:
- a time-domain symbol containing the sensing signal;
- a slot number containing the sensing signal;
- a start symbol of a time-domain resource containing the sensing signal;
- an end symbol of a time-domain resource containing the sensing signal;
- a number of symbols of a time-domain resource occupied by the sensing signal;
- a duration of a time-domain resource occupied by the sensing signal;
- a start slot of a time-domain resource containing the sensing signal;
- an end symbol of a time-domain resource containing the sensing signal; or
- a number of slots of time-domain resource occupied by the sensing signal.

FIG. 6 is a schematic diagram for determining the second node corresponding to the sensing signal based on the time-domain information, wherein time is represented in the horizontal direction, and frequency is represented in the perpendicular direction, the dotted-arrows in FIG. 6 indicates a reflection signal generated by the second node (a node 2, a node 3, and a node 4) upon receiving the sensing signal transmitted by the third node (node X). As illustrated in FIG. 6, a node X transmits the sensing signal, and the nodes 2, 3, and 4 reflect the sensing signal. Additionally, the nodes 2, 3, and 4 reflect the sensing signal at different time-domain positions. For example, the node 2 reflects the sensing signal at a time instant 1, the node 3 reflects the sensing signal at a time instant 2, and the node 4 reflects the sensing signal at a time instant 3. The first node (or the node 1, not illustrated in FIG. 6) receives respectively the sensing signals reflected by the nodes 2, 3, and 4; and the first node determines the second node corresponding to the received sensing signals based on the different reception times of the sensing signals. That is, the node 2 corresponds to the node that received the sensing signal at the time instant 1, and information of the node 2 may be sensed or detected based on the sensing signal received at the time instant 1. Similarly, the time instant 2 corresponds to the node 3, and the time instant 3 corresponds to the node 4.

In a scenario where the nodes 2, 3, and 4 directly reflect the sensing signal transmitted by node X, different respective distances between the node X and the node 2, 3, and 4 cause the node 1 to receive the reflected signal from the node 2, 3, and 4 at different time instants.

In a scenario where nodes 2, 3, and 4 transmit the sensing signal upon processing the sensing signal transmitted by the node X, pre-configured transmission time instants or communication protocol specified transmission time instants of the reflected signals from each node cause node 1 to receive the reflected signal at different time instants.
(2) The first information includes the frequency-domain information of the sensing signal.

In some embodiments, the second node transmits the sensing signal over different frequency-domain resources upon receiving the sensing signal transmitted by the third node. The first node determines the second node corresponding to the sensing signal over the frequency-domain resources on the sensing signal based on the first information upon receiving the sensing signal.

In some embodiments, the frequency-domain information includes at least one of:
- a frequency-domain resource occupied by the sensing signal;
- a carrier frequency of the sensing signal; or
- a carrier number occupied by the sensing signal.

The frequency-domain resource occupied by the sensing signal includes at least one of:
- a start position of the frequency-domain resource;
- an end position of the frequency-domain resource;
- a range of the frequency-domain resource (i.e. the extension from the starting position to the ending position); or
- a sub-carrier of the frequency-domain resource.

The carrier frequency of the sensing signal includes at least one of:
- carrier frequency numbering of the carrier frequency; or
- a frequency band of the carrier frequency.

The numbering of the carrier includes at least one of:
- an ID of the carrier numbering; or
- a sequence number of the carrier numbering.

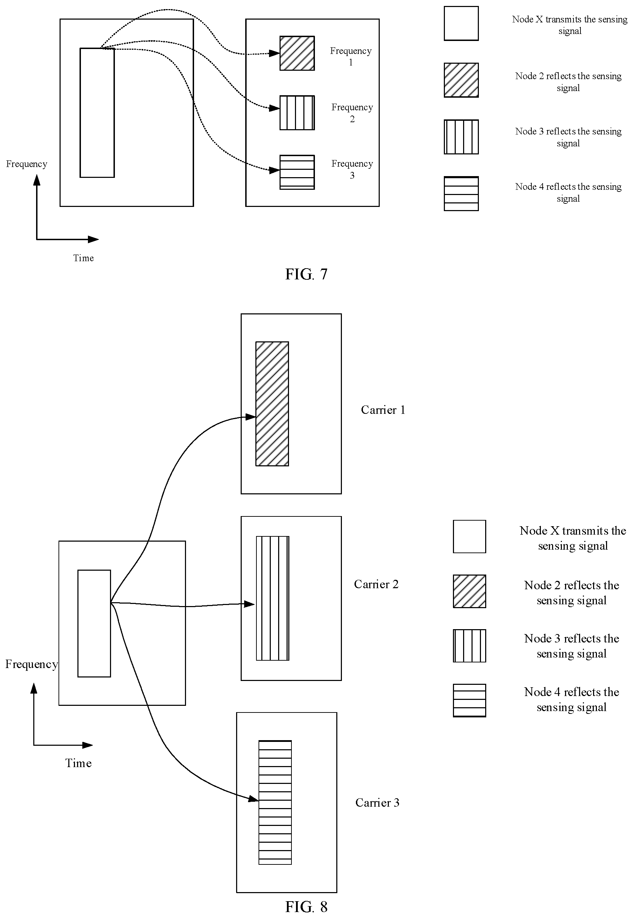

FIG. 7 is a schematic diagram for determining the second node corresponding to the sensing signal based on the frequency-domain information, wherein time is represented in the horizontal direction, and frequency is represented in the perpendicular direction, the dotted-arrows in FIG. 7 indicates a reflection signal generated by the second node (the node 2, the node 3, and the node 4) upon receiving the sensing signal transmitted by the third node (the node X). As illustrated in FIG. 7, the node X transmits the sensing signal, and the nodes 2, 3, and 4 reflects the sensing signal. Additionally, the nodes 2, 3, and 4 reflect the sensing signal at different frequency-domain positions, for example, the node 2 reflects the sensing signal on a frequency position 1, the node 3 reflects the sensing signal on a frequency position 2, and the node 4 reflects the sensing signal on a frequency position 3. The first node (or the node 1, not illustrated in FIG. 7) receives respectively the sensing signals reflected by the nodes 2, 3, and 4; and the first node determines the second node corresponding to the received sensing signals based on the different reception frequencies of the sensing signals. That is, the node 2 corresponds to the node that received the sensing signal on the frequency position 1, and information of the node 2 may be sensed or detected based on the sensing signal received on the frequency position 1. Similarly, the frequency position 2 corresponds to the node 3, and the frequency position 3 corresponds to the node 4.

In a scenario where the nodes 2, 3, and 4 transmit the sensing signal upon processing the sensing signal transmitted by the node X, pre-configured frequency resource positions or communication protocols specified frequency resource positions of the reflected signals from each node cause the node 1 to receive the reflected signal on different frequency resources, and are used to distinguish the nodes 2, 3, and 4.

FIG. 8 is another schematic diagram for determining the second node corresponding to the sensing signal based on the frequency-domain information, wherein time is represented in the horizontal direction, and frequency is represented in the perpendicular direction, the dotted-arrows in FIG. 8 indicates a reflection signal generated by the second node (the node 2, the node 3, and the node 4) upon receiving the sensing signal transmitted by the third node (node X). As illustrated in FIG. 8, the node X transmits the sensing signal, and the nodes 2, 3, and 4 reflect the sensing signal. Additionally, the nodes 2, 3, and 4 reflect the sensing signal on different carriers, for example, the node 2 reflects the sensing signal on a carrier 1, the node 3 reflects the sensing signal on a carrier 2, and the node 4 reflects the sensing signal on a carrier 3. The first node (or the node 1, not illustrated in FIG. 8) receives respectively the sensing signals reflected by the nodes 2, 3, and 4; and the first node determines the second node corresponding to the received sensing signals based on the different reception carriers of the sensing signals. That is, the node 2 corresponds to the node that received the sensing signal on the carrier 1, and information of the node 2 may be sensed or detected based on the sensing signal received over the carrier 1. Similarly, the carrier 2 corresponds to the node 3, and the carrier 3 corresponds to the node 4.

In a scenario where the nodes 2, 3, and 4 transmit the sensing signal upon processing the sensing signal transmitted by the node X, pre-configured carriers or communication protocols specified carriers carrying the reflected signals from each node cause the node 1 to receive the reflected signal on different frequency resources, and are used to distinguish the nodes 2, 3, and 4.
(3) The first information includes spatial information of the sensing signal.

In some embodiments, the second node transmits the sensing signal using different spatial information upon receiving the sensing signal transmitted by the third node; or the third node transmits the sensing signal using different spatial information, and the sensing signal is transmitted by different second nodes. The first node determines the second node corresponding to the sensing signal via the spatial information used by the sensing signal based on the first information upon receiving the sensing signal.

In some embodiments, the spatial information includes at least one of:
- a beam used by the sensing signal; or
- an antenna port used by the sensing signal.

The beam used by the sensing signal includes at least one of:
- an ID of the beam;
- a sequence number of the beam; or
- coding information of the beam.

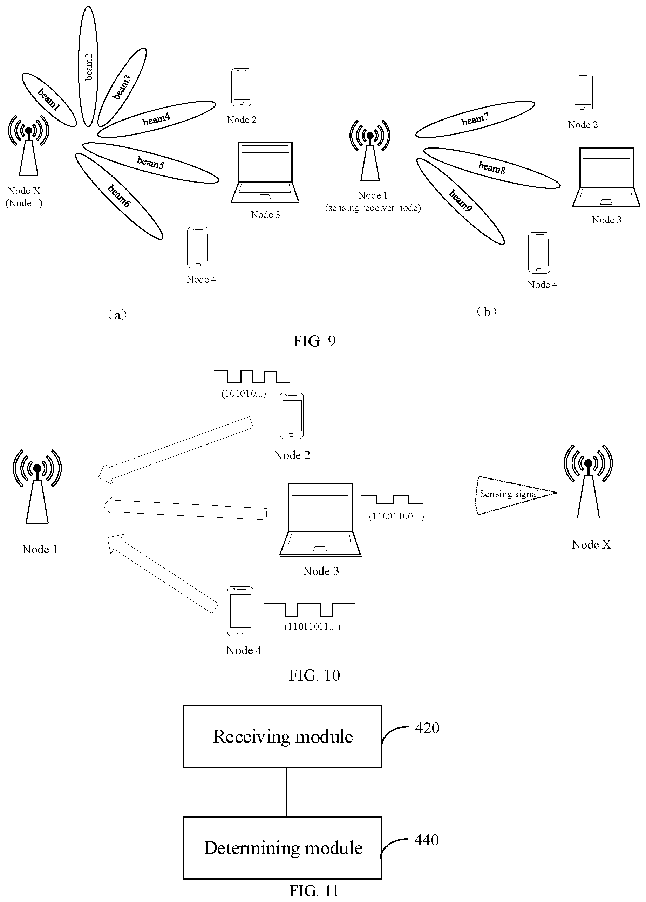

FIG. 9 is a schematic diagram for determining the second node corresponding to the sensing signal based on the spatial information. As illustrated in FIG. 9 (a), the third node (node X) transmits the sensing signal, wherein one beam is used for each transmission, and a beam 1 to a beam 6 are transmitted cyclically. A position of the second node (the nodes 2, 3, and 4) is consistent relative to a direction of the beams 4, 5 and 6, respectively. In this way, the sensing signals reflected by the nodes 2, 3, and 4 correspond to the beams 4, 5, and 6, respectively. The first node (or the node 1 or the node X) receives respectively the sensing signals reflected by the nodes 2, 3, and 4, and the first node determines the sensing node corresponding to the sensing signal based on the different beams. For example, the node 1 receives the sensing signal over the beam 1, wherein the corresponding sensing node is the node 2, in this way, information of the node 2 may be sensed or detected based on the sensing signal received over the beam 1. Similarly, the beam 5 corresponds to node 3, and the beam 6 corresponds to the node 4.

In a scenario where the nodes 2, 3, and 4 directly reflect the sensing signal transmitted by node X, and the sensing signal is received by the nodes 2, 3 and 4 over different beams, the nodes 2, 3, and 4, use the different beams used to receive the sensing signal to transmit back the sensing signal. As illustrated as FIG. 9 (a), the node X transmits the sensing signal to the node 2 over the beam 4, and the node 2 directly reflects the sensing signal to the node X (the node 1) over the same beam 4; similarly, node X transmits the sensing signal to the node 3 over the beam 5, and the node 3 directly reflects the sensing signal to the node X (the node 1) over the same beam 5.

In a scenario where the nodes 2, 3 and 4 transmit the sensing signal upon processing the sensing signal transmitted by the node X, pre-configured transmission beams or communication protocol specified transmission beams of the reflected signals from each node cause the node 1 to receive the reflected signals over different beams. As illustrated in FIG. 9 (b), the node 2, 3 and 4 transmit the sensing signal (the reflected sensing signal) upon processing the sensing signal transmitted by the node X, wherein the node 2 transmits the sensing signal to the node 1 over a beam 7, the node 3 transmits the sensing signal to the node 1 over a beam 8, and node 4 transmits the sensing signal to the node 1 over a beam 9. In this way, upon receiving the sensing signals over the different beams, the node 1 determines the second node that transmitted the sensing signal based on the first information.
(4) The first information includes coding information of the sensing signal.

In some embodiments, the second node transmits the sensing signal using different coding information upon receiving the sensing signal from the third node, for example, the second node transmits the sensing signal upon modulating the sensing signal via a modulation sequence. The first node determines the second node corresponding to the sensing signal via the coding information used by the sensing signal based on the first information upon receiving the sensing signal.

In some embodiments, the coding information includes: a modulation sequence used by the second node in modulating the sensing signal. The modulation sequences in a modulation sequence set have an orthogonal or quasi-orthogonal relationship. Different second nodes use different modulation sequences.

FIG. 10 is a schematic diagram for determining the second node corresponding to the sensing signal based on the coding information. The third node (the node X) transmits the sensing signal, the second node (the nodes 2, 3, and 4) modulates the sensing signal transmitted by the node X using different modulation codes, and transmits the sensing signal to the node 1. For example, the node 2 uses (101010...) as a modulation code, the node 3 uses (11001100...) as a modulation code, and the node 4 uses (11011011...) as a modulation code. The node 1 receives the sensing signal reflected (transmitted) by the nodes 2, 3, and 4, and determines the second node corresponding to the sensing signal based on the different modulation codes. For example, the node 2 is the node corresponding to the sensing signal modulated by the code (101010...), in this way, information of the second node may be sensed or detected based on the received sensing signal. Similarly, the node 3 is the node corresponding to the sensing signal modulated by the code (11001100...), and the node 4 is the node corresponding to the sensing signal modulated by the code (11011011...). The sequences of the modulation codes of the nodes 2, 3 and 4 are pre-configured or specified.

In some embodiments, the first information is added to the first sensing signal by a third node during transmission of the first sensing signal; or the first information is added to the first sensing signal by the second node upon reception of the first sensing signal. A first sensing signal is the sensing signal transmitted by the third node, and the third node is the node transmitting the sensing signal.

In some embodiments, the first information is added to the first sensing signal by at least one of:
- adding the first information to the first sensing signal via coding;
- adding the first information to the first sensing signal via modulation; or
- adding the first information to the first sensing signal via directional transmission.

In some embodiments, the first information is orthogonal or quasi-orthogonal. In this way, simultaneously receiving the sensing signals from a plurality of sensing nodes and determining the sensing signals of the plurality of nodes one by one may be achieved based on the first information.

In some embodiments, the first information is determined by the third node. For example, the first information is determined by the third node based on the second node or the candidate second node; wherein the target second node is a target receiver node of the first sensing signal, and the candidate second node is a candidate second node of the first sensing signal. That is, the first information is determined by the third node transmitting the first sensing signal based on the target receiver node or a receiver node that may receive the first sensing signal.

To determine the second node corresponding to the sensing signal based on the first information, the same first information is configured between each sensing node. In some embodiments, the first information is configured by at least one of:
- configuring, by a fourth node, the first information to the first node, and to at least one of the second node or a third node;
- reporting, by the second node, the first information to a fourth node, and subsequently configuring the first information to the first node and/or a third node;
- reporting, by the second node, the first information to the first node and/or a third node;
- using a configuration specified in the communication protocol; or
- scanning, by a fourth node, all second nodes to determine the first information, and subsequently configuring the first information to the first node and/or a third node.

The fourth node is a node for configuring the first information. The fourth node may be the same sensing node as the first sensing node, i.e., the first node configures the first information, configures the first information for at least one of the second node or the third node. For example, the first node configures the first information for at least the second node in a scenario where the first information is added to the sensing signal by the second node. As another example, the first node configures the first information for at least the third node in a scenario where the first information is added to the sensing signal by the third node. Alternatively, the fourth node and the third node are the same node, i.e., the third node configures the first information for the first node. In some embodiments, the third node may need to configure the first information for the second node; as another example; the third node configures the first information for the first node subsequent to scanning all second nodes to determine the first information.

It should be noted that step 320 may be implemented as an individual method for receiving the sensing signal; and step 340 may also be implemented as an individual method for determining the sensing signal, which is not limited in the present disclosure.

In the technical solutions according to the embodiments of the present disclosure, upon receipt of the sensing signal, the second node corresponding to the sensing signal is determined based on the first information of the correspondence between the second node and the sensing signal, such that the sensing node corresponding to the sensing signal is determined, and accuracy of the sensing is improved.

In addition, as the first information is orthogonal or quasi-orthogonal, upon receipt of a plurality of sensing signals under a scenario where a plurality of sensing signals are received, sensing signals corresponding to different sensing nodes are distinguished, such that effectiveness of the sensing is improved.

Hereinafter are embodiments of the apparatus of the present disclosure, which may be configured to implement the method embodiments of the present disclosure. For details not disclosed in the apparatus embodiments of the present disclosure, reference may be made to the method embodiments of the present disclosure.

FIG. 11 is a structural block diagram of an apparatus for determining a sensing node according to some embodiments of the present disclosure. The apparatus is configured to implement method embodiments of the first node, and may be implemented by hardware or software running on the corresponding software. The apparatus may be the first node or be configured as part of the first node. As illustrated in FIG. 11, the apparatus may include:
a receiving module 420, configured to receive a sensing signal;
a determining module 440, configured to determine the second node corresponding to the sensing signal based on first information of the sensing signal, wherein the first information is used to indicate a correspondence between the sensing signal and the second node.

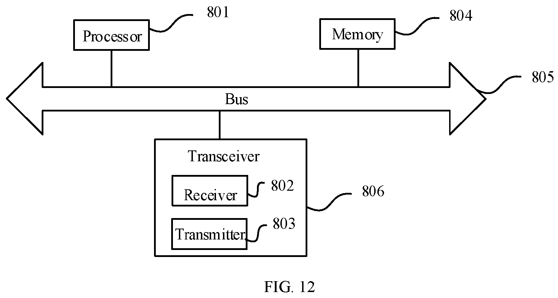

The receiving module 420 may be implemented as a receiver or a transmitter of a sensing device illustrated in FIG. 12, and the determining module 440 may be implemented as a processor in a sensing device.

**In one possible implementation, the receiving module 420 is configured to receive the sensing signal.**

The receiving module 420 receives the sensing signal.

In some embodiments, the receiving module 420 receives a sensing signal, wherein the sensing signal is a separate signal; or the receiving module 420 receives a sensing signal, wherein the sensing signal may be parsed into two sensing signals according to orthogonality properties thereof; or the receiving module 420 receives at least two sensing signals, which is not limited in the present disclosure.

The sensing signal received by the receiving module 420 corresponds to a second node, and the sensing signal is used by the first node to sense the second node. That is, the sensing signal is used to sense from the second node, at least one of:
- a position, i.e., geographic coordinates of the second node;
- a distance, i.e., a distance or a straight-line distance between the second node and the first node;
- a speed, i.e., a moving speed of the second node;
- an angle, i.e., an orientation of the second node relative to the first node;
- a phase, i.e., a phase of the sensing signal received, or a phase of the sensing signal received at different time instants; or
- a frequency, i.e., a frequency of changes in the sensing signal received such as amplitude changes, phase changes, power changes, or the like; or the frequency of changes in the cause for the aforementioned variations; for example, in a case where a distance change causes a phase change, the sensing signal may be used for the frequency of the phase change, which is also the frequency of the distance change.

In some embodiments, a third node transmits the sensing signal, and the second node is a node that directly reflects the sensing signal or a node that retransmits the sensing signal upon processing the sensing signal. That is, the sensing signal may be the sensing signal reflected from the second node following transmission by the third node. For example, the sensing node 20 illustrated in FIG. 3 is the third node and the first node, the sensing target 30 is the second node, and the sensing signal transmitted by the sensing node 20 is received by the sensing node 20 upon being directly reflected from the sensing target 30; or the sensing signal is an output from the second node, which is generated by processing the sensing signal from the third node. For example, the sensing signal is an output from the second node, which is generated by modulating the sensing signal from the third node. As another example from Mode 3 illustrated in FIG. 1, the base station 45 is the third node, the sensing target 46 is the second node, and the base station 47 is the first node. In this example, the sensing target 46 receives the sensing signal from the base station 45, processes the received sensing signal, and then transmits the processed sensing signal to the base station 47.

That is, the sensing signal includes at least one of:
- a second sensing signal resulting from the reflection of a first signal by the second node; or
- a third sensing signal transmitted after a first signal is processed by the second node.

The third node is the node transmitting the sensing signal, and may or may not be the same sensing node as the first node. Mode 1 and Mode 2 in the sensing system illustrated by FIG. 1 may be referenced for a scenario where the third node and the first node are the same sensing node. Reference may be made to any of Modes 3 to 6 in the sensing system illustrated in FIG. 1 for a scenario where the third node and the first node are different sensing nodes.

In some embodiments, the second node is a reduced capacity node. That is, the second node is at least one of:
- a node with a supported data rate less than a first threshold; or
- a node with a power saving requirement greater than a second threshold.

The first threshold is a threshold for a data rate supported by the sensing node specified in the communication protocol or pre-configured; and the second threshold is a threshold for a power saving requirement of the sensing node specified in the communication protocol or pre-configured.

**The determining module 440 is configured to determine the second node corresponding to the sensing signal based on first information of the sensing signal.**

The first information indicates a correspondence between the second node and the sensing signal.

The first information includes at least one of:
- time-domain information of the sensing signal;
- frequency-domain information of the sensing signal;
- spatial information of the sensing signal; or
- coding information of the sensing signal.

In some embodiments, the time-domain information includes at least one of:
- a time-domain symbol containing the sensing signal;
- a slot number containing the sensing signal;
- a start symbol of a time-domain resource containing the sensing signal;
- an end symbol of a time-domain resource containing the sensing signal;
- a number of symbols of a time-domain resource occupied by the sensing signal;
- a duration of a time-domain resource occupied by the sensing signal;
- a start slot of a time-domain resource containing the sensing signal;
- an end symbol of a time-domain resource containing the sensing signal; or
- a number of slots of time-domain resource occupied by the sensing signal.

In some embodiments, the frequency-domain information includes at least one of:
- a frequency-domain resource occupied by the sensing signal;
- a carrier frequency of the sensing signal; or
- a carrier number occupied by the sensing signal.

The frequency-domain resource occupied by the sensing signal includes at least one of:
- a starting position of the frequency-domain resource;
- an ending position of the frequency-domain resource;
- a range of the frequency-domain resource (i.e., the extension from the starting position to the ending position); or
- a sub-carrier of the frequency-domain resource.

The carrier frequency of the sensing signal includes at least one of:
- carrier frequency numbering of the carrier frequency; or
- a frequency band of the carrier frequency.

The numbering of the carrier includes at least one of:
- an ID of the carrier numbering; or
- a sequence number of the carrier numbering.

In some embodiments, the spatial information includes at least one of:
- a beam used by the sensing signal; or
- an antenna port used by the sensing signal.

The beam used by the sensing signal includes at least one of:
- an ID of the beam;
- a sequence number of the beam; or
- coding information of the beam.

In some embodiments, the coding information includes: a modulation sequence used by the second node in modulating the sensing signal.

In some embodiments, the first information is added to the first sensing signal by a third node during transmission of the first sensing signal; or the first information is added to the first sensing signal by the second node upon reception of the first sensing signal.

In some embodiments, the first information is added to the first sensing signal by at least one of:
- adding the first information to the first sensing signal via coding;
- adding the first information to the first sensing signal via modulation; or
- adding the first information to the first sensing signal via directional transmission.

In some embodiments, the first information is added to the first sensing signal via modulation in a scenario where the first information includes the coding information. For example, adding the first information to the first sensing signal via binary code formed by '1's and '0's; or adding the first information to the first sensing signal via direction transmission. As another example, "being orthogonal or quasi-orthogonal to each other" indicates that the modulation sequences used by different second nodes are different, or that the sensing signals received upon modulation by different second nodes are different.

In some embodiments, the first information is added to the first sensing signal via coding in a scenario where the first information includes the coding information. For example, the first information is added to the first sensing signal via convolution of the first sensing signal and specified sequences, wherein being orthogonal or quasi-orthogonal indicates the sequences used by different second nodes are different. As another example, the first information is added to the first sensing signal via a scrambled signal processing, wherein different second nodes use different scrambled code to scramble the first sensing signal, and "being orthogonal or quasi-orthogonal" indicates the scramble codes used by different second nodes are different.

In some embodiments, the first information is added to the first sensing signal via directional transmission in a scenario wherein the first information includes spatial information. For example, the first sensing signal is transmitted by different second nodes using different beams.

In some embodiments, the first information is added to the first sensing signal over different time-domain resources. For example, the first sensing signal is transmitted over different time-domain symbols by different second nodes.

In some embodiments, the first information is added to the first sensing signal over different frequency-domain resources. For example, the first sensing signal is transmitted over different carriers by different second nodes.

In some embodiments, the first information is determined by the third node. For example, the first information is determined by the third node based on the second node or the candidate second node; wherein the target second node is a target receiver node of the first sensing signal, and the candidate second node is a candidate second node of the first sensing signal. That is, the first information is determined by the third node transmitting the first sensing signal based on the target receiver node or a receiver node that may receive the first sensing signal.

To determine the second node corresponding to the sensing signal based on the first information, the same first information is configured between the sensing nodes. In some embodiments, the first information is configured by at least one of:
- configuring, by a fourth node, the first information to the first node, and to at least one of the second node or a third node;
- reporting, by the second node, the first information to a fourth node, and subsequently configuring the first information to the first node and/or a third node;
- reporting, by the second node, the first information to the first node and/or a third node;
- using a configuration specified in the communication protocol; or
- scanning, by a fourth node, all second nodes to determine the first information, and subsequently configuring the first information to the first node and/or a third node.

The fourth node is a node for configuring the first information. The fourth node may be the same sensing node as the first sensing node, i.e., the first node configures the first information, configures the first information for at least one of the second node or the third node. For example, the first node configures the first information for at least the second node in a scenario where the first information is added to the sensing signal by the second node. As another example, the first node configures the first information fpr at least the third node in a scenario where the first information is added to the sensing signal by the third node. Alternatively, the fourth node and the third node are the same node, i.e., the third node configures the first information for the first node. In some embodiments, the third node may need to configure the first information for the second node. As another example, the third node configures the first information for the first node subsequent to scanning all second nodes to determine the first information.

**In another possible implementation, the receiving module 420 is configured to receive the sensing signal.**

The receiving module 430 receives the sensing signal. The sensing signal is transmitted to the second node by the third node, and is received by the first node upon reflected or processed by the second node. That is, the sensing signal includes at least one of:
- a second sensing signal, resulting from the reflection of a first signal by the second node; or
- a third sensing signal transmitted after a first signal is processed by the second node.

The first sensing signal is a sensing signal transmitted by the third node.

The third node is the node transmitting the sensing signal, and may or may not be the same sensing node as the first node. Mode 1 and Mode 2 in the sensing system illustrated by FIG. 1 may be referenced for a scenario where the third node and the first node are the same sensing node. Any of Modes 3 to 6 in the sensing system illustrated by FIG. 1 may be referenced for a scenario where the third node and the first node are different sensing nodes.

In some embodiments, the receiving module 420 receives a sensing signal, wherein the sensing signal is a separate signal; or a sensing signal is received by the receiving module 420 wherein the sensing signal may be parsed into two sensing signals according to orthogonality properties thereof; or the receiving module 420 receives at least two sensing signals, which is not limited in the present disclosure.

The sensing signal received by the receiving module 420 corresponds to a second node, and the sensing signal is used by the first node to sense the second node; i.e., the sensing signal is used to sense from the second node, at least one of:
- a position, i.e., geographic coordinates of the second node;
- a distance, i.e., a distance or a straight-line distance between the second node and the first node;
- a speed, i.e., a moving speed of the second node;
- an angle, i.e., an orientation of the second node relative to the first node;
- a phase, i.e., a phase of the sensing signal received, or a phase of the sensing signal received at different time instants; or
- a frequency, i.e., a frequency of changes in the sensing signal received such as amplitude changes, phase changes, power changes, or the like.; or a frequency of changes in the cause for the aforementioned variations. for example, in a case where a distance change causes a phase change, the sensing signal may be used for the frequency of the phase change, which is also the frequency of the distance change.

In some embodiments, the second node is a reduced capacity node; i.e., the second node is at least one of:
- a node with a supported data rate less than a first threshold; or
- a node with a power saving requirement greater than a second threshold.

The first threshold is a threshold for a data rate supported by the sensing node specified in the communication protocol or pre-configured. The second threshold is a threshold for a power saving requirement of the sensing node specified in the communication protocol or pre-configured.

**The determining module 440 is configured to determine the second node corresponding to the sensing signal based on first information of the sensing node.**

The first information indicates a correspondence between the second node and the sensing signal.

The first information includes at least one of:
- time-domain information of the sensing signal;
- frequency-domain information of the sensing signal;
- spatial information of the sensing signal; or
- coding information of the sensing signal.

The following describes the above four scenarios:
(1) The first information includes the time-domain information of the sensing signal.

In some embodiments, the second node transmits the sensing signal over different time-domain resources upon receiving the sensing signal transmitted by the third node. The first node determines the second node corresponding to the sensing signal over the time-domain resources on the sensing signal based on the first information upon receiving the sensing signal.

In some embodiments, the time-domain information includes at least one of:
- a time-domain symbol containing the sensing signal;
- a slot number containing the sensing signal;
- a start symbol of a time-domain resource containing the sensing signal;
- an end symbol of a time-domain resource containing the sensing signal;
- a number of symbols of a time-domain resource occupied by the sensing signal;
- a duration of a time-domain resource occupied by the sensing signal;
- a start slot of a time-domain resource containing the sensing signal;
- an end symbol of a time-domain resource containing the sensing signal; or
- a number of slots of time-domain resource occupied by the sensing signal.

FIG. 6 is a schematic diagram for determining the second node corresponding to the sensing signal based on the time-domain information, wherein time is represented in the horizontal direction, and frequency is represented in the perpendicular direction, the dotted-arrows in FIG. 6 indicates a reflection signal generated by the second node (the node 2, the node 3, and the node 4) upon receiving the sensing signal transmitted by the third node (the node X). As illustrated in FIG. 6, the node X transmits the sensing signal, and the nodes 2, 3, and 4 reflect the sensing signal. Additionally, the nodes 2, 3, and 4 reflect the sensing signal at the different time-domain positions, for example, the node 2 reflects the sensing signal at the time instant 1, the node 3 reflects the sensing signal at the time instant 2, and the node 4 reflects the sensing signal at the time instant 3. The first node (or the node 1, not illustrated in FIG. 6) receives respectively the sensing signals reflected by the nodes 2, 3, and 4; and the first node determines the second node corresponding to the received sensing signals based on the different reception times of the sensing signals. That is, the node 2 corresponds to the node that received the sensing signal at the time instant 1, and information of the node 2 may be sensed or detected based on the sensing signal received at the time instant 1. Similarly, the time instant 2 corresponds to the node 3, and the time instant 3 corresponds to the node 4.

In a scenario where the nodes 2, 3, and 4 directly reflect the sensing signal transmitted by node X, different respective distances between the node X and the nodes 2, 3 and 4 causes the node 1 to receive the reflected signal from the nodes 2, 3, and 4 at different time instants.

In a scenario where the nodes 2, 3, and 4 transmit the sensing signal upon processing the sensing signal transmitted by the node X, pre-configured transmission time instants or communication protocol specified transmission time instants of the reflected signals from each node cause node 1 to receive the reflected signal at different time instants.
(2) The first information includes the frequency-domain information of the sensing signal.

In some embodiments, the second node transmits the sensing signal over different frequency-domain resources upon receiving the sensing signal transmitted by the third node. The first node determines the second node corresponding to the sensing signal over the frequency-domain resources on the sensing signal based on the first information upon receiving the sensing signal.

In some embodiments, the frequency-domain information includes at least one of:
- a frequency-domain resource occupied by the sensing signal;
- a carrier frequency of the sensing signal; or
- a carrier number occupied by the sensing signal.

The frequency-domain resource occupied by the sensing signal includes at least one of:
- a starting position of the frequency-domain resource;
- an ending position of the frequency-domain resource;
- a range of the frequency-domain resource (i.e. the extension from the starting position to the ending position); or
- a sub-carrier of the frequency-domain resource.

The carrier frequency of the sensing signal includes at least one of:
- carrier frequency numbering of the carrier frequency; or
- a frequency band of the carrier frequency.

The numbering of the carrier includes at least one of:
- an ID of the carrier numbering; or
- a sequence number of the carrier numbering.

FIG. 7 is a schematic diagram for determining the second node corresponding to the sensing signal based on the frequency-domain information, wherein time is represented in the horizontal direction, and frequency is represented in the perpendicular direction, the dotted-arrows in FIG. 7 indicates a reflection signal generated by the second node (the node 2, the node 3, and the node 4) upon receiving the sensing signal transmitted by the third node (the node X). As illustrated in FIG. 7, the node X transmits the sensing signal, and the nodes 2, 3, and 4 reflect the sensing signal. Additionally, the nodes 2, 3, and 4 reflect the sensing signal at different frequency-domain positions. For example, the node 2 reflects the sensing signal on the frequency position 1, the node 3 reflects the sensing signal on the frequency position 2, and the node 4 reflects the sensing signal on the frequency position 3. The first node (or the node 1, not illustrated in FIG. 7) receives respectively the sensing signals reflected by the nodes 2, 3, and 4; and the first node determines the second node corresponding to the received sensing signals based on the different reception frequencies of the sensing signals. That is, the node 2 corresponds to the node that received the sensing signal on the frequency position 1, and information of the node 2 may be sensed or detected based on the sensing signal received on the frequency position 1. Similarly, the frequency position 2 corresponds to the node 3, and the frequency position 3 corresponds to the node 4.

In a scenario where the nodes 2, 3, and 4 transmit the sensing signal upon processing the sensing signal transmitted by the node X, pre-configured frequency resource positions or communication protocols specified frequency resource positions of the reflected signals from each node cause the node 1 to receive the reflected signal on different frequency resources, and are used to distinguish the nodes 2, 3, and 4.

FIG. 8 is another schematic diagram for determining the second node corresponding to the sensing signal based on the frequency-domain information, wherein time is represented in the horizontal direction, and frequency is represented in the perpendicular direction, the dotted-arrows in FIG. 8 indicates a reflection signal generated by the second node (the node 2, the node 3, and the node 4) upon receiving the sensing signal transmitted by the third node (the node X). As illustrated in FIG. 8, the node X transmits the sensing signal, and the nodes 2, 3, and 4 reflect the sensing signal. Additionally, the nodes 2, 3, and 4 reflect the sensing signal on different carriers. For example, the node 2 reflects the sensing signal on the carrier 1, the node 3 reflects the sensing signal on the carrier 2, and the node 4 reflects the sensing signal on the carrier 3. The first node (or the node 1, not illustrated in FIG. 8) receives respectively the sensing signals reflected by the nodes 2, 3, and 4; and the first node determines the second node corresponding to the received sensing signals based on the different reception carriers of the sensing signals. That is, the node 2 corresponds to the node that received the sensing signal on the carrier 1, and information of the node 2 may be sensed or detected based on the sensing signal received over the carrier 1. Similarly, the carrier 2 corresponds to the node 3, and the carrier 3 corresponds to the node 4.

In a scenario where the nodes 2, 3, and 4 transmit the sensing signal upon processing the sensing signal transmitted by the node X, pre-configured carriers or communication protocols specified carriers carrying the reflected signals from each node cause the node 1 to receive the reflected signal on different frequency resources, and are used to distinguish the nodes 2, 3, and 4.
(4) The first information includes spatial information of the sensing signal.

In some embodiments, the second node transmits the sensing signal using different spatial information upon receiving the sensing signal transmitted by the third node; or the third node transmits the sensing signal using different spatial information, and the sensing signal is transmitted by different second nodes. The first node determines the second node corresponding to the sensing signal via the spatial information used by the sensing signal based on the first information upon receiving the sensing signal.

In some embodiments, the spatial information includes at least one of:
- a beam used by the sensing signal; or
- an antenna port used by the sensing signal.

The beam used by the sensing signal includes at least one of:
- an ID of the beam;
- a sequence number of the beam; or
- coding information of the beam.

FIG. 9 is a schematic diagram for determining the second node corresponding to the sensing signal based on the spatial information. As illustrated in FIG. 9 (a), the third node (node X) transmits the sensing signal, wherein one beam is used for each transmission, and the beam 1 to the beam 6 are transmitted cyclically. A position of the second node (the nodes 2, 3, and 4) is consistent relative to a direction of the beams 4, 5 and 6, respectively. In this way, the sensing signals reflected by the nodes 2, 3, and 4 correspond to the beams 4, 5, and 6, respectively. The first node (or the node 1 or the node X) receives respectively the sensing signals reflected by the nodes 2, 3, and 4, and the first node determines the sensing node corresponding to the sensing signal based on the different beams. For example, the node 1 receives the sensing signal over the beam 1, wherein the corresponding sensing node is the node 2, in this way, information of the node 2 may be sensed or detected based on the sensing signal received over the beam 1. Similarly, the beam 5 corresponds to the node 3, and the beam 6 corresponds to the node 4.

In a scenario where the nodes 2, 3, and 4 directly reflect the sensing signal transmitted by the node X, and the sensing signal received by the nodes 2, 3 and 4 use different beams, the nodes 2, 3, and 4, use the different beams used to receive the sensing signal to transmit back the sensing signal. As illustrated as FIG. 9 (a), the node X transmits the sensing signal to the node 2 over the beam 4, and the node 2 directly reflects the sensing signal to the node X (the node 1) over the same beam 4; similarly, the node X transmits the sensing signal to the node 3 over the beam 5, and the node 3 directly reflects the sensing signal to the node X (node 1) over the same beam 5.

In a scenario where the nodes 2, 3 and 4 transmit the sensing signal upon processing the sensing signal transmitted by the node X, pre-configured transmission beams or communication protocol specified transmission beams of the reflected signals from each node cause the node 1 to receive the reflected signals over different beams. As illustrated in FIG. 9 (b), the nodes 2, 3 and 4 transmit the sensing signal (the reflected sensing signal) upon processing the sensing signal transmitted by the node X, wherein the node 2 transmits to node 1 over the beam 7, the node 3 transmits to the node 1 over the beam 8, and node 4 transmits to node 1 over the beam 9. In this way, upon receiving the sensing signals over the different beams, the node 1 determines the second node that transmitted the sensing signal based on the first information.
(5) The first information includes coding information of the sensing signal.

In some embodiments, the second node transmits the sensing signal using different coding information upon receiving the sensing signal transmitted by the third node, for example, the second node transmits the sensing signal upon modulating the sensing signal via a modulation sequence. The first node determines the second node corresponding to the sensing signal via the coding information used by the sensing signal based on the first information upon receiving the sensing signal.

In some embodiments, the coding information includes: a modulation sequence used by the second node in modulating the sensing signal. The modulation sequences in a modulation sequence set have an orthogonal or quasi-orthogonal relationship. And different second nodes use different modulation sequences.

FIG. 10 is a schematic diagram for determining the second node corresponding to the sensing signal based on the coding information. The third node (the node X) transmits the sensing signal, the second node (the nodes 2, 3, and 4) modulates the sensing signal transmitted by the node X using different modulation codes, and transmits the sensing signal to the node 1. For example, the node 2 uses (101010...) as a modulation code, the node 3 uses (11001100...) as a modulation code, and the node 4 uses (11011011...) as a modulation code. The node 1 receives the sensing signal reflected (transmitted) by the nodes 2, 3, and 4, and determines the second node corresponding to the sensing signal based on the different modulation codes. For example, the node 2 is the node corresponding to the sensing signal modulated by the code (101010...), and in this way, information of the node 2 may be sensed or detected based on the received sensing signal. Similarly, the node 3 is the node corresponding to the sensing signal modulated by the code (11001100...), and the node 4 is the node corresponding to the sensing signal modulated by the code (11011011...). The sequences of the modulation codes of the nodes 2, 3 and 4 are pre-configured or specified.

In some embodiments, the first information is added to the first sensing signal by a third node during transmission of the first sensing signal; or the first information is added to the first sensing signal by the second node upon reception of the first sensing signal. Wherein a first sensing signal is the sensing signal transmitted by the third node, and the third node is the node transmitting the sensing signal.

In some embodiments, the first information is added to the first sensing signal by at least one of:
- adding the first information to the first sensing signal via coding;
- adding the first information to the first sensing signal via modulation; or
- adding the first information to the first sensing signal via directional transmission.

In some embodiments, the first information is orthogonal or quasi-orthogonal. In this way, simultaneously receiving the sensing signals from a plurality of sensing nodes and determining the sensing signals of the plurality of nodes one by one may be achieved based on the first information.

In some embodiments, the first information is determined by the third node. For example, the first information is determined by the third node based on the second node or the candidate second node; wherein the target second node is a target receiver node of the first the sensing signal, and the candidate second node is a candidate second node of the first sensing signal. That is, the first information is determined by the third node transmitting the first sensing signal based on the target receiver node or a receiver node that may receive the first sensing signal.

To determine the second node corresponding to the sensing signal based on the first information, the same first information is configured between each sensing node. In some embodiments, the first information is configured by at least one of:
- configuring, by a fourth node, the first information to the first node, and to at least one of the second node or a third node;
- reporting, by the second node, the first information to a fourth node, and subsequently configuring the first information to the first node and/or a third node;
- reporting, by the second node, the first information to the first node and/or a third node;
- using a configuration specified in the communication protocol; or
- scanning, by a fourth node, all second nodes to determine the first information, and subsequently configuring the first information to the first node and/or a third node.

The fourth node is the node configured to the first information. The fourth node may be the same sensing node as the first sensing node, i.e., the first node configures the first information, configures to at least one of the second node or the third node. For example, the first node configures the first information to at least the second node in a scenario where the first information is added to the sensing signal by the second node; as another example, the first node configures the first information to at least the third node in a scenario where the first information is added to the sensing signal by the third node. Alternatively, the fourth node and the third node are the same node, i.e., the third node configures the first information to the first node. In some embodiments, the third node may need to configure the first information to the second node; as another example; the third node configures the first information to the first node subsequent to scanning all second nodes to determine the first information.

It should be noted that the receiving module 420 may be configured individually to receive the sensing signal; the determining module 440 may be configured individually to determine the sensing node; and the receiving module 420 and the determining module 440 may be configured in combination to determine the sensing node, which is not limited in the present disclosure.

It should be further noted that the apparatus according to the above embodiments is only described by way of example in terms of the division of functional modules when implementing its functions. In practice, the functions may be allocated to be completed by different functional modules as needed. That is, the device or apparatus may be designed to have different functional modules to complete part or all of the functions as described above.

Regarding the apparatus described in the above embodiments, the specific details regarding each module performing operations have been given in detail in the above method embodiments of the present disclosure, which are not elaborated herein. For details not disclosed in the apparatus embodiments of the present disclosure, reference may be made to the method embodiments of the present disclosure.

FIG. 12 is a schematic structural diagram of a sensing device according to some embodiments of the present disclosure. The sensing device may include: a processor 801, a receiver 802, a transmitter 803, a memory 804, and a bus 805.

The processor 801 includes one or more processing cores, and the processor 801 executes various functional applications and information processing by running software programs and modules. In some embodiments, the processor 801 may be configured to implement the functions and steps of the determining module 440.

The receiver 802 and the transmitter 803 may be implemented as one transceiver 806, the transceiver 806 may be a communication chip, wherein the receiver 802 may be configured to implement the functions and steps of the receiving module 420.

The memory 804 is communicably connected to the processor 801 over the bus 805.

The memory 804 may be configured to store one or more computer programs, wherein the processor 801 is configured to call and run the one or more computer programs to perform each step performed by the nodes in the method embodiments of the present disclosure.

Additionally, the memory 804 may be implemented by any type of transitory or non-transitory storage device or a combination thereof, and the transitory or non-transitory storage device includes but is not limited to: a random-access memory (RAM), a read-only memory (ROM), an erasable programmable read-only memory (EPROM), an electrically erasable programmable read-only memory (EEPROM), a flash memory or other solid-state storage devices, a compact disc read-only memory (CD-ROM), a high-density digital video disc (DVD) or other optical storage devices, a tape cassette, a magnetic tape, a disk storage or other magnetic storage devices.

In a case where the sensing device is implemented as a first node, the processor and the receiver relevant to the embodiments of the present disclosure may perform the steps performed by the first node in the method illustrated in FIG. 5 or FIG. 6, and will not be elaborated herein.

In a possible implementation, in a case where the sensing device is implemented as the first node:
the receiver 802 is configured to receive the sensing signal; and
the processor 801 is configured to determine the second node corresponding to the sensing signal based on first information, wherein the first information is used to indicate a correspondence between the sensing signal and the second node.

Some embodiments of the present disclosure further provide a computer-readable storage medium storing one or more computer programs, wherein the one or more programs configured to be called and executed by the processor of the first node and the second node to perform the method for determining a sensing node.

Optionally, the computer-readable storage medium includes: a ROM, a RAM, a solid state drive (SSD), an optical disk, or the like. The RAM may include a resistance random-access memory (ReRAM) and a dynamic random-access memory (DRAM).

Some embodiments of the present disclosure further provide a chip. The chip includes programmable electric logic circuitry and/or one or more computer instructions, wherein the chip, when running on the first node and the second node, is configured to perform the method for determining a sensing node.

Some embodiments of the present disclosure further provide a computer program product or computer program. The computer program product or computer program includes one or more computer instructions, wherein the one or more computer instructions are stored in the computer-readable storage medium. The one or more computer instructions, when loaded and executed by a processor of the first node and the second node from the computer-readable storage medium, cause the processor to perform the method for determining a sensing node.

It should be understood that the term "indicate" in the embodiments of the present disclosure means the direct indication, indirect indication, or an associated relationship. For example, A indicating B means that A directly indicates B, for example, B is acquired via A, A indirectly indicates B, for example, A indicates C and a B is acquired via C, A and B and associated.

In the description of the embodiments of the present disclosure, the term "corresponding" may indicate a direct or indirect correspondence between two items, or an association relationship between the two items, or a relationship between indication and being indicated, configuration and being configured, and the like.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

In addition, serial numbers of the processes described herein only show an exemplary possible sequence of performing the processes. In some other embodiments, the processes may also be performed out of the numbering sequence. For example, two processes with different serial numbers are performed simultaneously, or two processes with different serial numbers are performed in reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements and the like, made within the spirit and principle of the present disclosure should fall within the protection scope of the present disclosure.

## Claims

1. A method for determining a sensing node, performed by a first node, the method comprising:
receiving a sensing signal; and
determining, based on first information of the sensing signal, a second node corresponding to the sensing signal, wherein the first information is used to indicate a correspondence between the sensing signal and the second node.

2. The method according to claim 1, wherein the first information comprises at least one of:
time-domain information of the sensing signal;
frequency-domain information of the sensing signal;
spatial information of the sensing signal; or
coding information of the sensing signal.

3. The method according to claim 2, wherein the time-domain information comprises at least one of:
a time-domain symbol containing the sensing signal;
a slot number containing the sensing signal;
a start symbol of a time-domain resource containing the sensing signal;
an end symbol of a time-domain resource containing the sensing signal;
a number of symbols of a time-domain resource occupied by the sensing signal;
a duration of a time-domain resource occupied by the sensing signal;
a start slot of a time-domain resource containing the sensing signal;
an end symbol of a time-domain resource containing the sensing signal; or
a number of slots of time-domain resource occupied by the sensing signal.

4. The method according to claim 2, wherein the frequency-domain information comprises at least one of:
a frequency-domain resource occupied by the sensing signal;
a carrier frequency of the sensing signal; or
a carrier number occupied by the sensing signal.

5. The method according to claim 2, wherein the spatial information comprises at least one of:
a beam used by the sensing signal; or
an antenna port used by the sensing signal.

6. The method according to claim 2, wherein the coding information comprises:
a modulation sequence used by the second node in modulating the sensing signal.

7. The method according to any one of claims 1 to 6, wherein the sensing signal comprises at least one of:
a second signal resulting from reflection of a first sensing signal by the second node; or
a third sensing signal transmitted upon processing of a first sensing signal by the second node;
wherein the first sensing signal is a sensing signal transmitted by a third node.

8. The method according to claim 7, wherein
the first information is added to the first sensing signal by a third node during transmission of the first sensing signal; or
the first information is added to the first sensing signal by the second node upon reception of the first sensing signal.

9. The method according to claim 8, wherein the first information is added to the first sensing signal by at least one of:
adding the first information to the first sensing signal via coding;
adding the first information to the first sensing signal via modulation; or
adding the first information to the first sensing signal via directional transmission.

10. The method according to claim 8, wherein the first information is determined by the third node.

11. The method according to claim 10, wherein
the first information is determined by the third node based on a target second node or a candidate second node, wherein the target second node is a target receiver node of the first sensing signal, and the candidate second node is a candidate receiver node of the first sensing signal.

12. The method according to any one of claims 1 to 6, wherein the first information is configured by at least one of:
configuring, by a fourth node, the first information to the first node, and to at least one of the second node or a third node;
reporting, by the second node, the first information to a fourth node, and subsequently configuring the first information to the first node and/or a third node;
reporting, by the second node, the first information to the first node and/or a third node;
using a configuration specified in the communication protocol; or
scanning, by a fourth node, all second nodes to determine the first information, and subsequently configuring the first information to the first node and/or a third node.

13. The method according to any one of claims 1 to 6, wherein the second node is at one of:
a node with a supported data rate less than a first threshold; or
a node with a power saving requirement greater than a second threshold.

14. The method according to any one of claims 1 to 6, wherein the sensing signal is used to sense, from the second node, at least one of:
a position;
a distance;
a speed;
an angle;
a phase; or
a frequency.

15. An apparatus for determining a sensing node, comprising:
a receiving module configured to receive a sensing signal; and
a determining module configured to determine a second node corresponding to the sensing signal based on first information of the first sensing signal, wherein the first information indicates an association relationship between the sensing signal and the second node.

16. A sensing device, comprising:
a transceiver configured to receive a sensing signal;
a processor configured to determine a second node corresponding to the sensing signal based on first information of the first sensing signal, wherein the first information indicates a correspondence between the sensing signal and the second node.

17. A computer-readable storage medium storing one or more computer programs, wherein a processor executes the one or more computer programs to cause a sensing device to perform the method for determining a sensing node as defined in any one of the claims 1 to 14.

18. A chip, comprising programmable electric logic circuitry and/or one or more programs, wherein the chip, when running, is configured to cause a sensing device to perform the method for determining a sensing node as defined in any one of the claims 1 to 14.

19. A computer program product, comprising one or more computer instructions stored in a computer-readable storage medium; wherein the one or more computer instructions when called and executed by a processor, cause a sensing device to perform the method for determining a sensing node as defined in any one of the claims 1 to 14.

20. A computer program, comprising one or more computer instructions stored in a computer-readable storage medium; wherein the one or more computer instructions when called and executed by a processor, cause a sensing device to perform the method for determining a sensing node as defined in any one of the claims 1 to 14.
